(19) Europäisches Patentamt
European Patent Office
Office européen des brevets

(11) **EP 4 549 123 A1**

(12) **EUROPEAN PATENT APPLICATION**
published in accordance with Art. 153(4) EPC

(43) Date of publication:
**07.05.2025 Bulletin 2025/19**

(21) Application number: **23830824.1**

(22) Date of filing: **28.04.2023**

(51) International Patent Classification (IPC):
***B29C 45/00*** *(2006.01)* ***B29C 45/26*** *(2006.01)*
***B29D 15/00*** *(2006.01)* ***F16H 55/17*** *(2006.01)*

(52) Cooperative Patent Classification (CPC):
**B29C 45/00; B29C 45/26; B29D 15/00; F16H 55/17**

(86) International application number:
**PCT/JP2023/016970**

(87) International publication number:
**WO 2024/004372 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.06.2022 JP 2022105060**

(71) Applicant: **DIC Corporation**
**Tokyo 174-8520 (JP)**

(72) Inventors:
- **KUROKAWA Ryuhei**
  **Ichihara-shi, Chiba 290-8585 (JP)**
- **KURATA Kunito**
  **Ichihara-shi, Chiba 290-8585 (JP)**
- **TAKAHASHI Yoshihisa**
  **Ichihara-shi, Chiba 290-8585 (JP)**
- **MORI Kotaro**
  **Tokyo 103-8233 (JP)**

(74) Representative: **Scott, Stephen John**
**YUJA IP LAW**
**4 Centenary House**
**The Avenue**
**York YO30 6AU (GB)**

(54) **GEAR, ROBOT, AND GEAR PRODUCTION METHOD**

(57) A gear (10) formed of a resin containing a filler includes a plurality of recesses that are formed on a shaft-direction end surface (11) of the gear (10), that spread from one side to the other side of respective straight lines extending outward in the radial direction of the gear (10) from respective corresponding gate points, and that have asymmetric shapes with respect to the respective straight lines, where each of a plurality of points on the shaft-direction end surface (11) corresponding one-to-one to a plurality of pin gates used to eject the resin during molding of the gear (10) is taken as the gate point.

FIG. 2

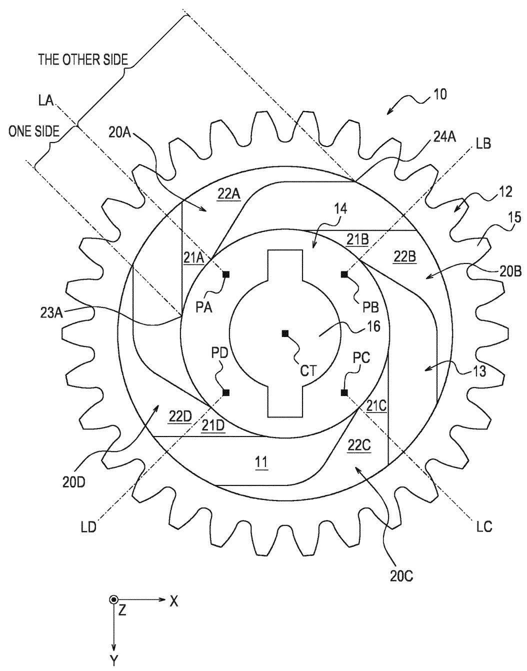


EP 4 549 123 A1

## Description

### Technical Field

The present disclosure relates to a gear, a robot, and a gear production method.

### Background Art

PTL 1 discloses a gear formed of a fiber-reinforced resin. A resin flow rate adjustment groove is formed in the gear. According to PTL 1, during molding of the gear, the flow rate, outward in the radial direction, of the resin ejected from a pin point gate is uniformized by being controlled with a resin flow rate adjustment groove protrusion made to protrude in a cavity to form the resin flow rate adjustment groove. As a result, the orientation of the reinforcing fiber in the resin is uniformized in the radial direction over the whole circumference.

PTL 2 discloses a gear molded by using a molding material in which a base resin is mixed with a reinforcing fiber. According to PTL 2, during molding of the gear, a molding material introduced in a cavity region corresponding to a bottom land flows by relatively rotating a metal mold and a shaft body. As a result, the orientation of a reinforcing fiber in the molding material in the bottom land is disturbed.

### Citation List

### Patent Literature

PTL 1: Japanese Unexamined Patent Application Publication No. 2004-358665
PTL 2: Japanese Unexamined Patent Application Publication No. 2019-218994

### Summary of Invention

### Technical Problem

When the fiber orientation is controlled by the shape of a gear rather than the fiber orientation is controlled by a molding method, if the fiber orientation is locally uniformized in the radial direction, local deformation and stress tend to occur, and there is a concern that the dimensional accuracy and the strength may deteriorate.

It is an object of the present disclosure to provide a gear in which local deformation or stress does not readily occur.

### Solution to Problem

Some aspects according to the present disclosure will be described below.

[Aspect 1]

A gear formed of a resin containing a filler, including
a plurality of recesses that are formed on a shaft-direction end surface of the gear, that spread from one side to the other side of respective straight lines extending outward in the radial direction of the gear from respective corresponding gate points, and that have asymmetric shapes with respect to the respective straight lines, where each of a plurality of points on the shaft-direction end surface corresponding one-to-one to a plurality of pin gates used to eject the resin during molding of the gear is taken as the gate point.

[Aspect 2]

The gear according to Aspect 1, wherein a portion of each recess present on at least the one side of the straight line has a shape in which a width in a radial direction of the gear increases from a first end present on the one side of the straight line of both ends of the recess in the circumferential direction of the gear toward a second end present on the other side of the straight line.

[Aspect 3]

The gear according to Aspect 2, wherein the first end is formed making an acute angle when viewed from the end surface of the gear in the shaft direction.

[Aspect 4]

The gear according to Aspect 2 or Aspect 3, wherein the second end is formed making an acute angle when viewed from the end surface of the gear in the shaft direction.

[Aspect 5]

The gear according to any one of Aspect 1 to Aspect 4, including

a circular rim having a plurality of teeth, and
a web having the plurality of recesses and adjoining the inner circumference of the rim,
wherein a portion of each recess present on at least the other side of the straight line extends to the outer circumference of the web connected to or opposite the inner circumference of the rim.

[Aspect 6]

The gear according to any one of Aspect 1 to Aspect 5, wherein the plurality of recesses form a shape having n-fold symmetry, where the number of the gate points is set to be n, when viewed from the end surface of the gear in the shaft direction.

[Aspect 7]

The gear according to any one of Aspect 1 to Aspect 6, wherein the plurality of recesses form a shape having point symmetry with respect to a center of the shaft-direction end surface.

[Aspect 8]

The gear according to any one of Aspect 1 to Aspect 7, wherein the number of recesses included in the plurality of recesses is a multiple of the number of the gate points.

[Aspect 9]

The gear according to any one of Aspect 1 to Aspect 8, wherein the filler is a fibrous filler.

[Aspect 10]

The gear according to any one of Aspect 1 to Aspect 9, wherein the resin is a polyarylene sulfide resin.

[Aspect 11]

A robot including the gear according to any one of Aspect 1 to Aspect 10.

[Aspect 12]

A gear production method including

melting a resin containing a filler, and
molding a resin gear by ejecting a molten resin from a plurality of pin gates into a cavity of a metal mold that is a gear-molding metal mold having the plurality of pin gates and that includes a plurality of protrusions spreading from one side to the other side of respective straight lines extending outward in the radial direction of the metal mold from the respective corresponding pin gates and having asymmetric shapes with respect to the respective straight lines.

## Advantageous Effects of Invention

According to the present disclosure, a gear in which local deformation or stress does not readily occur can be provided.

## Brief Description of Drawings

[Fig. 1] Fig. 1 is a perspective view illustrating a gear according to an embodiment of the present disclosure.
[Fig. 2] Fig. 2 is an annotated plan view illustrating a gear according to an embodiment of the present disclosure.
[Fig. 3] Fig. 3 is a bottom view illustrating a gear according to an embodiment of the present disclosure.
[Fig. 4] Fig. 4 is a perspective view illustrating a gear-molding metal mold according to an embodiment of the present disclosure.
[Fig. 5] Fig. 5 is another perspective view illustrating a gear-molding metal mold according to an embodiment of the present disclosure.
[Fig. 6] Fig. 6 is an annotated plan view illustrating a gear-molding metal mold according to an embodiment of the present disclosure.
[Fig. 7] Fig. 7 is a flow chart illustrating a gear production method according to an embodiment of the present disclosure.
[Fig. 8] Fig. 8 is a diagram illustrating dimensional accuracy evaluation results of Comparative example 1 and Example 1.
[Fig. 9] Fig. 9 is a graph illustrating the endurance test results of Comparative example 1 and Example 1.
[Fig. 10] Fig. 10 is a diagram illustrating a weld state of Comparative example 1.
[Fig. 11] Fig. 11 is a diagram illustrating a weld state of Example 1.

## Description of Embodiments

An embodiment according to the present disclosure will be described below with reference to the drawings.

In the drawings, the same or corresponding portions are indicated by the same reference. In the explanations of the present embodiment, regarding the same or corresponding portions, the explanations thereof will be appropriately omitted or simplified.

The configuration of a gear 10 according to the present embodiment will be described with reference to Fig. 1 to Fig. 3.

In the drawings, a plane parallel to the upper surface and the bottom surface of the gear 10 is referred to as XY plane, and an axis parallel to the central axis of the gear 10 is referred to as Z axis. For the sake of facilitating explanation, the surfaces of the gear 10 illustrated in Fig. 2 and Fig. 3 are set to be an upper surface and a bottom surface, respectively, but may be reversely assumed to be a bottom surface and an upper surface, respectively, or may be assumed to be a side surface and an opposite side surface, respectively.

The gear 10 is formed of a resin containing a filler. Any resin may be used as the resin, and in the present embodiment, a polyarylene sulfide (PAS) resin, such as a polyphenylene sulfide (PPS) resin, is used. The resin is provided with anisotropy by the filler being added. Any filler may be used as the filler, and in the present embodiment, a fibrous filler, such as a glass fiber or a carbon fiber, is used.

The gear 10 includes a plurality of recesses. Each recess is formed on a shaft-direction end surface 11 of the gear 10. Each recess spreads from one side to the other side of a straight line extending outward in the radial direction of the gear 10 from a corresponding gate point and has an asymmetric shape with respect to the straight line, where each of a plurality of points on the shaft-direction end surface 11 corresponding one-to-one to a plurality of pin gates used to eject the resin during molding of the gear 10 is taken as the gate point. The number of the recesses may be any number, is preferably a multiple of the number of the gate points, and is the same number as the number of the gate points in the present embodiment. In the present embodiment, since the number of the gate points is 4, the number of the recesses is 4. That is, the gear 10 includes four recesses 20A, 20B, 20C, and 20D as the plurality of recesses.

As illustrated in Fig. 2, the recess 20A spreads from one side to the other side of a straight line LA extending outward in the radial direction of the gear 10 from a corresponding gate point PA and has an asymmetric shape with respect to the straight line LA. Likewise, the recess 20B spreads from one side to the other side of a straight line LB extending outward in the radial direction of the gear 10 from a corresponding gate point PB and has an asymmetric shape with respect to the straight line LB. Likewise, the recess 20C spreads from one side to the other side of a straight line LC extending outward in the radial direction of the gear 10 from a corresponding gate point PC and has an asymmetric shape with respect to the straight line LC. Likewise, the recess 20D spreads from one side to the other side of a straight line LD extending

outward in the radial direction of the gear 10 from a corresponding gate point PD and has an asymmetric shape with respect to the straight line LD.

According to such a configuration, during molding of the gear 10, the moving speed, outward in the radial direction, of the resin ejected from each of a plurality of pin gates on one side of the straight line extending outward in the radial direction of the gear 10 from the gate point corresponding to the respective pin gate differs from that on the other side. As a result, since the orientation of the filler contained in the resin is disturbed without being uniformized in the radial direction, local deformation or stress does not readily occur, the dimensional accuracy and the strength are improved, and consequently, the performance of the gear 10 is improved.

The gear 10 may be any type of gear and is, in the present embodiment, a spur gear including a circular rim 12, a web 13 adjoining the inner circumference of the rim 12, and a cylindrical hub 14 connected to rim 12 by the web 13. The rim 12 has a plurality of teeth 15. The web 13 has four recesses 20A, 20B, 20C, and 20D as the plurality of recesses. The hub 14 has a shaft hole 16 to fit a shaft.

As illustrated in Fig. 3, such a recess formed on the shaft-direction end surface 11 is not formed on the shaft-direction end surface 17 opposite to the shaft-direction end surface 11 of the gear 10. However, as a modified example of the present embodiment, a plurality of recesses akin to the recesses 20A, 20B, 20C, and 20D may also be formed on the shaft-direction end surface 17.

The gear 10 can be applied to, for example, a robot gear. That is, according to the present embodiment, a robot including the gear 10 can be provided.

The configuration of a gear-molding metal mold 30 according to the present embodiment will be described with reference to Fig. 4 to Fig. 6.

The metal mold 30 may be a two-plate metal mold formed by combining a fixed-side plate and a movable-side plate and, in the present embodiment, is a three-plate metal mold formed by combining a fixed-side plate, a movable-side plate, and, in addition, an intermediate plate. Fig. 4 is a diagram illustrating the fixed-side plate of the metal mold 30 obliquely viewed from the opposite side of a cavity 33 formation side. Fig. 5 is a diagram illustrating the fixed-side plate of the metal mold 30 obliquely viewed from the cavity 33 formation side. In Fig. 4 to Fig. 6, for the sake of facilitating explanation, a portion of the metal mold 30 is omitted or simplified.

The metal mold 30 includes a plurality of runners and a plurality of pin gates. Each of the number of the runners and the number of the pin gates may be any number and is 4 in the present embodiment. That is, the metal mold 30 includes four runners 31A, 31B, 31C, and 31D as the plurality of runners and four pin gates 32A, 32B, 32C, and 32D as the plurality of pin gates. The runners 31A, 31B, 31C, and 31D are connected to the pin gates 32A, 32B, 32C, and 32D, respectively.

The metal mold 30 includes a plurality of protrusions to form the plurality of recesses in the gear 10. Each protrusion spreads from one side to the other side of a straight line extending outward in the radial direction of the metal mold 30 from a corresponding pin gate and has an asymmetric shape with respect to the straight line. The number of the protrusions may be any number, is preferably a multiple of the number of the pin gates, and is the same number as the number of the pin gates in the present embodiment. In the present embodiment, since the number of the pin gates is 4, the number of the protrusions is 4. That is, the metal mold 30 includes four protrusions 40A, 40B, 40C, and 40D as the plurality of protrusions. During molding of the gear 10, the recesses 20A, 20B, 20C, and 20D are formed in the gear 10 by the protrusions 40A, 40B, 40C, and 40D, respectively.

As illustrated in Fig. 6, the protrusion 40A spreads from one side to the other side of a straight line MA extending outward in the radial direction of the metal mold 30 from a corresponding pin gate 32A and has an asymmetric shape with respect to the straight line MA. Likewise, the protrusion 40B spreads from one side to the other side of a straight line MB extending outward in the radial direction of the metal mold 30 from a corresponding pin gate 32B and has an asymmetric shape with respect to the straight line MB. Likewise, the protrusion 40C spreads from one side to the other side of a straight line MC extending outward in the radial direction of the metal mold 30 from a corresponding pin gate 32C and has an asymmetric shape with respect to the straight line MC. Likewise, the protrusion 40D spreads from one side to the other side of a straight line MD extending outward in the radial direction of the metal mold 30 from a corresponding pin gate 32D and has an asymmetric shape with respect to the straight line MD.

According to such a configuration, during molding of the gear 10, the moving speed, outward in the radial direction, of the resin ejected from each of the plurality of pin gates on one side of the straight line extending outward in the radial direction of the metal mold 30 from the pin gate differs from that on the other side. As a result, since the orientation of the filler contained in the resin is disturbed without being uniformized in the radial direction, local deformation or stress does not readily occur, the dimensional accuracy and the strength are improved, and consequently, the performance of the gear 10 is improved.

The recesses 20A, 20B, 20C, and 20D of the gear 10 will be described in detail with reference to mainly Fig. 2 and Fig. 6.

The recesses 20A, 20B, 20C, and 20D are arranged in the vicinity of the gate points PA, PB, PC, and PD, respectively, and at positions outward in the radial direction from the gate points PA, PB, PC, and PD. Therefore, during molding of the gear 10, the protrusions 40A, 40B, 40C, and 40D of the metal mold 30 corresponding to the recesses 20A,

20B, 20C, and 20D, respectively, can change the direction of the resin flow in the vicinity of the pin gates 32A, 32B, 32C, and 32D, respectively, so as to prevent the resin from being linearly oriented in the radial direction.

A first portion 21A that is a portion of the recess 20A present on at least the one side of the straight line LA has a shape in which a width in a radial direction of the gear 10 increases from a first end 23A present on the one side of the straight line LA of both ends of the recess 20A in the circumferential direction of the gear 10 toward a second end 24A present on the other side of the straight line LA. A first portion 21B that is a portion of the recess 20B present on at least the one side of the straight line LB, a first portion 21C that is a portion of the recess 20C present on at least the one side of the straight line LC, and a first portion 21D that is a portion of the recess 20D present on at least the one side of the straight line LD also have the same shape. As a matter of course, portions of the protrusions 40A, 40B, 40C, and 40D of the metal mold 30 corresponding to the first portions 21A, 21B, 21C, and 21D, respectively, have shapes corresponding to the shapes of the first portions 21A, 21B, 21C, and 21D, respectively. That is, a portion of the protrusion 40A present on at least one side of the straight line MA has a shape in which a width in a radial direction of the metal mold 30 increases from a circumferential direction end 43A present on one side of the straight line MA toward a circumferential direction end 44A present on the other side of the straight line MA. A portion of the protrusion 40B present on at least one side of the straight line MB, a portion of the protrusion 40C present on at least one side of the straight line MC, and a portion of the protrusion 40D present on at least one side of the straight line MD also have the same shape.

According to such a configuration, during molding of the gear 10, the moving speed, outward in the radial direction, of the resin ejected from each of the plurality of pin gates on one side of the straight line extending outward in the radial direction of the gear 10 from the gate point corresponding to the pin gate is changed in accordance with the position in the circumferential direction of the gear 10. For example, in the cavity 33 of the metal mold 30, on at least one side of the straight line corresponding to the straight line LA, that is, the straight line MA extending outward in the radial direction from the pin gate 32A, the movement, outward in the radial direction, of the resin ejected from the pin gate 32A is delayed by the protrusion 40A of the metal mold 30 with increasing distance of the position of the protrusion 40A from the circumferential direction end 43A corresponding to the first end 23A of the recess 20A. As a result, since it becomes more difficult to uniformize, in the radial direction, the orientation of the filler contained in the resin, it becomes more difficult that local deformation or stress occurs.

In the present embodiment, the second portion 22A that is a portion of the recess 20A present on the other side of the straight line LA has a shape in which a width of only a portion adjoining the first portion 21A in a radial direction of the gear 10 increases from the first end 23A of the recess 20A toward the second end 24A. The second portion 22B that is a portion of the recess 20B present on the other side of the straight line LB, the second portion 22C that is a portion of the recess 20C present on the other side of the straight line LC, and the second portion 22D that is a portion of the recess 20D present on the other side of the straight line LD also have the same shape. As a matter of course, portions of the protrusions 40A, 40B, 40C, and 40D of the metal mold 30 corresponding to the second portions 22A, 22B, 22C, and 22D, respectively, have shapes corresponding to the shapes of the second portions 22A, 22B, 22C, and 22D, respectively. That is, a portion of the protrusion 40A present on the other side of the straight line MA has a shape in which a width of only a portion of a region adjoining the portion present on the one side of the straight line MA in a radial direction of the metal mold 30 increases from the circumferential direction end 43A of the protrusion 40A toward the circumferential direction end 44A. A portion of the protrusion 40B present on the other side of the straight line MB, a portion of the protrusion 40C present on the other side of the straight line MC, and a portion of the protrusion 40D present on the other side of the straight line MD also have the same shape.

According to such a configuration, during molding of the gear 10, the moving speed, outward in the radial direction, of the resin ejected from each of the plurality of pin gates on the other side of the straight line extending outward in the radial direction of the gear 10 from the gate point corresponding to the pin gate is partly changed in accordance with the position in the circumferential direction of the gear 10. For example, in the cavity 33 of the metal mold 30, on at least the other side of the straight line corresponding to the straight line LA, that is, the straight line MA extending outward in the radial direction from the pin gate 32A, the movement, outward in the radial direction, of the resin ejected from the pin gate 32A is partly delayed by the protrusion 40A of the metal mold 30 with increasing distance of the position of the protrusion 40A from the circumferential direction end 43A corresponding to the first end 23A of the recess 20A. As a result, since it becomes more difficult to uniformize, in the radial direction, the orientation of the filler contained in the resin, it becomes more difficult that local deformation or stress occurs.

The first end 23A of the recess 20A is formed making an acute angle when viewed from the end surface of the gear 10 in the shaft direction. Viewing from the end surface in the shaft direction means viewing the shaft-direction end surface 11 in the shaft direction of the gear 10 as illustrated in Fig. 2. For example, the recess 20A is formed into a polygonal shape, such as a triangle, in which at least one vertex has an acute angle. As illustrated in Fig. 2, preferably one or more sides of the polygon are curved outward in the radial direction so as to have a convex shape. The recesses 20B, 20C, and 20D are the same as the recess 20A.

In the present embodiment, the second end 24A of the recess 20A is also formed making an acute angle when viewed from the end surface of the gear 10 in the shaft direction. For example, the recess 20A is formed into a polygonal

shape, such as a triangle, in which at least two vertexes have an acute angle. The recesses 20B, 20C, and 20D are the same as the recess 20A.

Since the resin readily flows in a large flow passage, setting a large curved flow passage has higher effect than setting a plurality of fine curved flow passages. In the present embodiment, the resin can be made to readily flow in a predetermined direction by forming each recess into a polygonal shape in which at least one and preferably at least two vertexes have an acute angle so as to set a large curved flow passage as illustrated in Fig. 2.

At least the second portion 22A of the recess 20A, at least the second portion 22B of the recess 20B, at least the second portion 22C of the recess 20C, and at least the second portion 22D of the recess 20D extend to the outer circumference of the web 13 connected to the inner circumference of the rim 12. In the present embodiment, since each recess continuously extends in the radial direction from the vicinity of the corresponding gate point to the vicinity of a tooth tip, a recess region to obtain predetermined fiber orientation can be ensured by effectively using a region of the web 13. In the present embodiment, the rim 12 is connected to the web 13 without a gap, but a gap may be present between, for example, the rim 12 and the web 13. In such a modified example, at least the second portion 22A of the recess 20A, at least the second portion 22B of the recess 20B, at least the second portion 22C of the recess 20C, and at least the second portion 22D of the recess 20D may extend to the outer circumference of the web 13 opposite the inner circumference of the rim 12 with a gap interposed therebetween.

The recesses 20A, 20B, 20C, and 20D, as a whole, form a shape having n-fold symmetry, where the number of the gate points is set to be n, when viewed from the end surface of the gear 10 in the shaft direction. That is, the recesses 20A, 20B, 20C, and 20D, as a whole, have 360°/(number of gates) rotational symmetry. In the present embodiment, since the number of the gate points is 4, the shape of the recesses 20A, 20B, 20C, and 20D have 4-fold symmetry when viewed in the shaft direction of the gear 10. For example, the number of the gate points may be 3, and in such a modified example, a plurality of recesses may be formed so as to have 3-fold symmetry.

The shape of the recesses 20A, 20B, 20C, and 20D, as a whole, has point symmetry about the center CT of the shaft-direction end surface 11. For example, the recesses 20A, 20B, 20C, and 20D, as a whole, is formed into the shape of a windmill. Therefore, during molding of the gear 10, the protrusions 40A, 40B, 40C, and 40D of the metal mold 30 corresponding to the recesses 20A, 20B, 20C, and 20D, respectively, readily curve the flow direction of the resin. The flow direction of the resin being curved makes the resin pressure during flowing to be nonuniform. As a result, the resin orientation can be disturbed without adopting a specific molding method for controlling the resin orientation.

A large flow passage shape has a large influence on warpage deformation, and symmetry of warpage deformation is important for a rotary body such as a gear 10. When a large curved flow passage is symmetrically set with respect to a gate, an effect of disturbing the fiber orientation by the curved flow passage is cancelled due to symmetry of the warpage deformation since the fiber is arranged at a meeting portion of the flow passage. In the present embodiment, a flow passage which has asymmetry with respect to the gate but which has n-fold symmetry, where the number of the gates is denoted by n, and, more specifically, has point symmetry about the center CT, being formed enables the symmetry of the warpage deformation to be improved. As a result, the circularity of the gear 10 is improved.

A gear production method according to the present embodiment will be described with reference to Fig. 7.

Initially, Step S1 of melting the resin containing a filler is performed. A known method can be used for the method for melting the resin.

Subsequently, Step S2 of molding the resin gear 10 by ejecting a molten resin from a plurality of pin gates into the cavity 33 of the metal mold 30 through a plurality of runners is performed. Regarding the method for molding the gear 10 by ejecting the resin into the cavity 33 of the metal mold 30, a method akin to the method in which a known gear is molded by ejecting a resin into the cavity of a known metal mold can be used.

In the present embodiment, the resin containing a filler is used for molding the gear 10. Therefore, the gear 10 according to the present embodiment corresponds to a molded article of the resin containing a filler, and the gear production method according to the present embodiment corresponds to a method for producing the molded article.

The resin used in the present embodiment is preferably a thermoplastic resin. There is no particular limitation regarding the thermoplastic resin, and examples include polyolefin-based resins, such as polypropylenes, polyethylenes, and polybutenes; polyester-based resins, such as polyethylene terephthalates and polybutylene terephthalates; polyamide-based resins or aromatic polyamide resins, such as nylon-6 and nylon 6,6; thermoplastic polyimide resins; polyamide-imide-based resins; polystyrene-based resins, such as polystyrenes, syndiotactic polystyrenes, acrylonitrile-styrene copolymer resins or acrylonitrile-butadiene-styrene copolymer resins; polyarylene sulfide-based resins, such as polyphenylene sulfides; polyphenylene ether-based resins; polyurethane-based resins; polylactic acids; polyether ether ketone-based resins; polyether imide-based resins; polyketone-based resins; polyarylate-based resins, such as amorphous polyarylates and liquid crystalline polyarylates; and liquid crystal polyester-based resins.

Of these, thermoplastic resins used in the present embodiment are preferably thermoplastic polyimide resins, polyamide-imide-based resins, polyarylene sulfide-based resins, polyphenylene ether-based resins, polyether ether ketone resins, polyether imide resins, polyketone-based resins, polyarylate-based resins, and liquid crystal polyester resins which are so-called engineering plastics or super engineering plastics having excellent heat resistance, mechanical

characteristics, and the like, more preferably polyarylene sulfide-based resins from the viewpoint of chemical resistance, heat resistance, and mechanical characteristics, and particularly preferably polyphenylene sulfide resins (hereafter also referred to as "PPS resins") of the polyarylene sulfide-based resins (hereafter also referred to as "PAS resins").

In the present embodiment, the above-described resins may be used alone or may be used in the form of a polymer alloy in which a plurality of the above-described resins are mixed. In this regard, the resin containing a filler according to the present embodiment may include a filler described later and the above-described resin or, as the situation demands, may be in the form of a composition including any additive component described later (a coloring agent, an antistatic agent, an antioxidant, a heat-resistant stabilizer, an ultraviolet stabilizer, an ultraviolet absorber, a foaming agent, a flame retardant, a flame retardant auxiliary, a rust inhibitor, a coupling agent, a silane coupling agent, a thermoplastic elastomer, or a synthetic resin).

The polyarylene sulfide resin has a resin structure in which a bonding structure of an aromatic ring and a sulfur atom serves as a repeating unit and is specifically a resin in which a structure section denoted by General formula (1) below and, as the situation demands, a trifunctional structure section denoted by General formula (2) below serve as repeating units.

[Chem. 1]

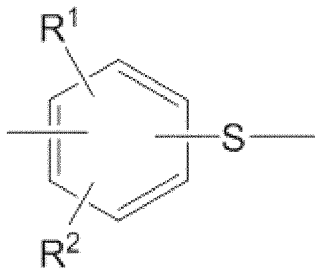

Formula (1)

In Formula (1), each of $R^1$ and $R^2$ represents a hydrogen atom, an alkyl group having a carbon atom number within the range of 1 to 4, a nitro group, an amino group, a phenyl group, a methoxy group, or an ethoxy group.

[Chem. 2]

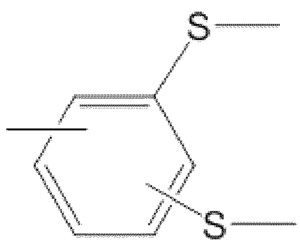

Formula (2)

The trifunctional structure section denoted by Formula (2) is preferably within the range of 0.001% to 3% by mole and particularly preferably within the range of 0.01% to 1% by mole relative to a total number of moles of the trifunctional structure section and other structure sections.

Herein, regarding the structure section denoted by General formula (1), in particular, $R^1$ and $R^2$ in the formula are preferably a hydrogen atom from the viewpoint of the mechanical strength of the above-described PAS resin. In such an instance, a structure section which is denoted by Formula (3) below and which has a bond at a para position and a structure section which is denoted by Formula (4) below and which has a bond at a meta position are mentioned.

[Chem. 3]

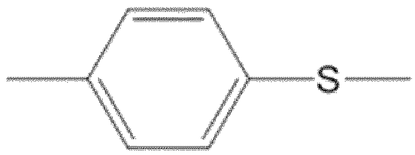

Formula (3)

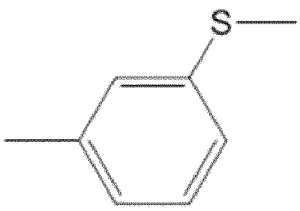

Formula (4)

Of these, in particular, a structure denoted by General formula (3) in which a sulfur atom is bonded to a para position of an aromatic ring in the repeating unit is preferable from the viewpoint of the heat resistance and the crystallinity of the PAS resin.

In addition, the PAS resin may contain not only the structure sections denoted by General formulae (1) and (2) but also structure sections denoted by Structural formulae (5) to (8) below, where the amount is 30% by mole or less of a total of these structure sections and the structure sections denoted by General formula (1) and General formula (2).

[Chem. 4]

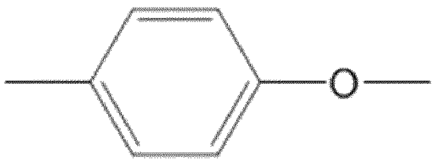

Formula (5)

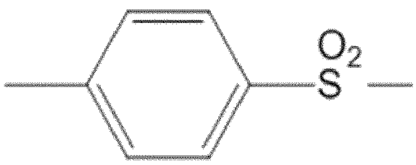

Formula (6)

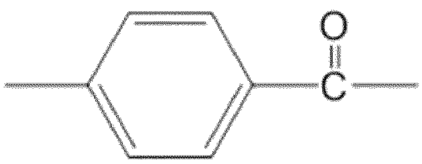

Formula (7)

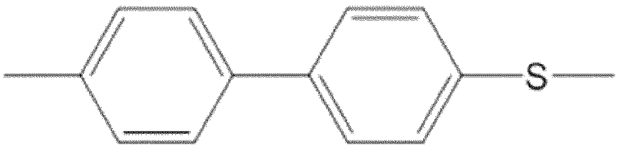

Formula (8)

In particular, in the present embodiment, the structure sections denoted by General formulae (5) to (8) are preferably 10% by mole or less from the viewpoint of the heat resistance and the mechanical strength of the PAS resin. When the PAS resin contains the structure sections denoted by General formulae (5) to (8), the bonding form thereof may be any one of a random copolymer and a block copolymer.

Further, the PAS resin may have a naphthyl sulfide bond or the like in the molecular structure thereof, and the amount is preferably 3% by mole or less and particularly preferably 1% by mole or less relative to a total number of moles of the above-described bond and other structure sections.

In this regard, there is no particular limitation regarding the physical properties of the PAS resin provided that the effect of the present embodiment is not impaired and the physical properties are as described below.

(Melt viscosity)

There is no particular limitation regarding the melt viscosity of the PAS resin. The melt viscosity (V6) measured at 300°C is preferably within the range of 2 Pa·s or more, preferably within the range of 1,000 Pa·s or less, more preferably within the range of 500 Pa·s or less, and further preferably within the range of 200 Pa·s or less. Regarding the melt viscosity (V6), polyarylene sulfide resin is measured by using a flow tester, CFT-500D, produced by SHIMADZU CORPORATION, and a measurement value measured after keeping at 300°C for 6 min under a load of $1.96 \times 10^6$ Pa and L/D of 10 (mm)/1 (mm) is taken as the melt viscosity.

(Non-Newtonian index)

There is no particular limitation regarding the non-Newtonian index of the PAS resin, and the non-Newtonian index is preferably within the range of 0.90 or more and 2.00 or less. When a linear-type polyarylene sulfide resin is used, the non-Newtonian index is preferably within the range of 0.90 or more and more preferably within the range of 0.95 or more to preferably within the range of 1.50 or less and more preferably within the range of 1.20 or less. Such a polyarylene sulfide resin has excellent mechanical properties, fluidity and abrasion resistance. In this regard, in the present embodiment, the non-Newtonian index (N-value) is a value calculated by using the following formula, where a shear rate (SR) and shear stress (SS) are measured by using Capilograph under the condition of a melting point + 20°C and a ratio of an orifice length (L) to an orifice diameter (D), L/D, = 40. The non-Newtonian index (N-value) being closer to 1 indicates that a structure is closer to linear, and the non-Newtonian index (N-value) being higher indicates that a structure is more highly branched.

[Math. 1]

$$SR = K \cdot SS^N$$

Herein, SR represents a shear rate ($s^{-1}$), SS represents shear stress ($dyne/cm^2$), and K represents a constant.

Regarding the filler, a known, commonly used material can also be used provided that the effect of the present embodiment is not impaired. Examples include various shapes of fillers, such as fibrous materials and non-fibrous, e.g. granular and tabular, materials. Specifically, fibrous fillers, such as glass fiber, carbon fiber, silane glass fiber, ceramic fiber, aramid fiber, metal fiber, fibers of potassium titanate, silicon carbide, calcium silicate, wollastonite, and the like, and natural fiber can be used. In addition, non-fibrous fillers, such as glass beads, glass flake, barium sulfate, clay, pyrophyllite, bentonite, sericite, mica, isinglass, talc, attapulgite, ferrite, calcium silicate, calcium carbonate, glass beads, zeolite, milled fiber, and calcium sulfate can also be used.

In the present embodiment, there is no particular limitation regarding the content of the filler provided that the effect of the present embodiment is not impaired. The amount of the filler mixed is within the range of, for example, preferably 1 part by mass or more and more preferably 10 parts by mass or more to preferably 600 parts by mass or less and more preferably 200 parts by mass or less relative to 100 parts by mass of resin. Such a range is preferable since the resin exhibits good mechanical strength and moldability.

As the situation demands, the resin used in the present embodiment can be mixed with a silane coupling agent as

an optional component. There is no particular limitation regarding the silane coupling agent provided that the effect of the present embodiment is not impaired, and a preferable silane coupling agent includes a functional group that reacts with a carboxy group, for example, an epoxy group, an isocyanate group, an amino group, or a hydroxy group. Examples of such a silane coupling agent include epoxy-group-containing alkoxysilane compounds, such as γ-glycidoxypropyltrimethoxysilane, γ-glycidoxypropyltriethoxysilane, and β-(3,4-epoxycyclohexyl)ethyltrimethoxysilane, isocyanate-group-containing alkoxysilane compounds, such as γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane, amino-group-containing alkoxysilane compounds, such as γ-(2-aminoethyl)aminopropylmethyldimethoxysilane, γ-(2-aminoethyl)aminopropyltrimethoxysilane, and γ-aminopropyltrimethoxysilane, and hydroxy-group-containing alkoxysilane compounds, such as γ-hydroxypropyltrimethoxysilane and γ-hydroxypropyltriethoxysilane. In the present embodiment, the silane coupling agent is not an indispensable component, but when it is mixed, there is no particular limitation regarding the amount of addition thereof provided that the effect of the present embodiment is not impaired. The amount of mixing is within the range of preferably 0.01 parts by mass or more and more preferably 0.1 parts by mass or more to preferably 10 parts by mass or less and more preferably 5 parts by mass or less relative to 100 parts by mass of the resin. Such a range is preferable since the resin has good corona resistance, moldability, and in particular mold releasability, a molded article exhibits excellent adhesiveness to the epoxy resin, and the mechanical strength is improved.

As the situation demands, the resin used in the present embodiment may contain a thermoplastic elastomer as an optional component. Examples of the thermoplastic elastomer include polyolefin-based elastomers, fluorine-based elastomers, and silicone-based elastomers, and of these, polyolefin-based elastomers are preferable. When these elastomers are added, there is no particular limitation regarding the amount of mixing thereof provided that the effect of the present embodiment is not impaired. The amount of mixing is within the range of preferably 0.01 parts by mass or more and more preferably 0.1 parts by mass or more to preferably 10 parts by mass or less and more preferably 5 parts by mass or less relative to 100 parts by mass of a resin (A). Such a range is preferable since the impact resistance of the resulting resin is improved.

Examples of the polyolefin-based elastomer include monopolymers of an α-olefin, copolymers of at least two α-olefins, and copolymers of at least one α-olefin and a vinyl-polymerizable compound having a functional group. In such an instance, examples of the α-olefin include α-olefins having a carbon atom number within the range of 2 or more and 8 or less, such as ethylene, propylene, and 1-butene. In this regard, examples of the functional group include a carboxy group, acid anhydride group (-C(=O)OC(=O)-), an epoxy group, an amino group, a hydroxy group, a mercapto group, an isocyanate group, and an oxazoline group. In addition, examples of the vinyl-polymerizable compound having a functional group include at least one type of vinyl acetate; α,β-unsaturated carboxylic acids, such as (meth)acrylic acids; α,β-unsaturated carboxylic acid alkyl esters, such as methyl acrylate, ethyl acrylate, and butyl acrylate; α,β-unsaturated carboxylic acid metal salts (metal includes alkali metals such as sodium, alkaline-earth metals such as calcium, zinc, and the like), such as ionomers; α,β-unsaturated carboxylic acid glycidyl esters, such as glycidyl methacrylate; α,β-unsaturated dicarboxylic acids, such as maleic acid, fumaric acid, and itaconic acid; and derivatives (monoesters, diesters, and acid anhydrides) of the above-described α,β-unsaturated dicarboxylic acid. The above-described thermoplastic elastomers may be used alone, or at least two types thereof may be used in combination.

Further, the resin used in the present embodiment may appropriately further contain, in addition to the above-described components, in accordance with the use, synthetic resins, such as polyester resins, polyamide resins, polyimide resins, polyether imide resins, polycarbonate resins, polyphenylene ether resins, polysulfone resins, polyether sulfone resins, polyether ether ketone resins, polyether ketone resins, polyarylene resins, polyethylene resins, polypropylene resins, polytetrafluoroethylene resins, polydifluoroethylene resins, polystyrene resins, ABS resins, phenol resins, urethane resins, and liquid crystal polymers (hereafter referred to simply as synthetic resins), as optional components. In the present embodiment, the synthetic resin is not an indispensable component, but when it is mixed, there is no particular limitation regarding the mixing ratio thereof provided that the effect of the present embodiment is not impaired. In this regard, the ratio of the synthetic resin mixed into the resin according to the present embodiment is changed in accordance with the purpose and cannot be unconditionally set. The mixing ratio is, for example, within the range of about 5 parts by mass or more and within the range of about 15 parts by mass or less relative to 100 parts by mass of the resin. In other words, The ratio of the resin (A) to a total of the resin (A) and the synthetic resin is within the range of preferably (100/115) or more and more preferably within the range of (100/105) or more on a mass basis.

In addition, as the situation demands, the resin used in the present embodiment may further include, as optional components, known, commonly used additives, such as a coloring agent, an antistatic agent, an antioxidant, a heat-resistant stabilizer, an ultraviolet stabilizer, an ultraviolet absorber, a foaming agent, a flame retardant, a flame retardant auxiliary, a rust inhibitor, and a coupling agent. These additives are not indispensable components and may be used while being appropriately adjusted within the range of preferably 0.01 parts by mass or more and 1,000 parts by mass or less relative to 100 parts by mass of the resin in accordance with the purpose and the use so as not to impair the effect of the present embodiment.

A method for producing the resin used in the present embodiment will be described below in detail.

The resin used in the present embodiment is formed by mixing indispensable components and, as the situation demands, other optional components. There is no particular limitation regarding the method for producing the resin used in the present embodiment, and a method in which indispensable components and, as the situation demands, optional components are mixed and melt-kneaded, in particular, a method in which dry mixing is performed uniformly by using a tumbler or a Henschel mixer, as the situation demands, and subsequently, a mixture is put into a twin screw extruder so as to be subjected to melt kneading is mentioned.

Regarding melt kneading, heating may be performed to a temperature range in which the resin temperature becomes the melting point of the resin or higher, a temperature range in which the resin temperature becomes preferably the melting point + 10°C or higher, or a temperature range of more preferably the melting point + 10°C or higher and further preferably the melting point + 20°C or higher to preferably the melting point + 100°C or lower and more preferably the melting point + 50°C or lower.

Regarding the above-described melt-kneader, a twin screw kneading extruder is preferable from the viewpoint of dispersibility and productivity. For example, it is preferable that melt kneading be performed while the amount of the resin composition ejected and the screw rotational speed are appropriately adjusted within the range of 5 to 500 (kg/hr) and within the range of 50 to 500 (rpm), respectively, and it is more preferable that melt kneading be performed under the condition of the ratio of these (the amount of ejection / screw rotational speed) being within the range of 0.02 to 5 (kg/hr/rpm). In this regard, introduction of the components into the melt-kneader and mixing may be performed simultaneously or separately. For example, regarding the above-described components, when the additive is added, it is preferable that the additive be put into the extruder from a side feeder of the twin screw extruder from the viewpoint of the dispersibility. Regarding the position of such a side feeder, a ratio of the distance from a resin introduction portion (top feeder) to the side feeder of the twin screw kneading extruder to the total length of the screw of the extruder is preferably 0.1 or more and more preferably 0.3 or more. In addition, such a ratio is preferably 0.9 or less and more preferably 0.7 or less.

The resin according to the present embodiment obtained by being subjected to melt kneading, as described above, is a molten mixture containing the above-described indispensable components, the optional components added as the situation demands, and components derived from these, and it is preferable that, after the melt kneading, a known method be performed, that is, the resin in a molten state is extrusion-molded into the shape of a strand, processed into the form of a pellet, a chip, a granule, a powder, or the like, and, as the situation demands, subjected to predrying in a temperature range of 100°C to 150°C.

The molded article according to the present embodiment is produced by molding the resin containing a filler. In this regard, a method for producing the molded article according to the present embodiment includes a step of melt-molding the above-described resin. Explanations will be provided below in detail.

The resin used in the present embodiment is subjected to injection molding. There is no particular limitation regarding various molding conditions, and molding can be performed by a common method. For example, a step of melting the resin in an injection-molding machine in a temperature range in which the resin temperature is the melting point of the resin or higher, preferably a temperature range in which the resin temperature is the melting point + 10°C or higher, more preferably a temperature range of the melting point + 10°C to the melting point + 100°C, and further preferably a temperature range of the melting point + 20°C to the melting point + 50°C may be performed, and thereafter, injection into a metal mold from a resin ejection outlet and molding may be performed. In such an instance, the metal mold temperature may be set to be in a known temperature range, such as room temperature (23°C) to 300°C and preferably 120°C to 180°C.

The gear 10 according to the present embodiment and a gear not including a plurality of recesses that were included in the gear 10 according to the present embodiment were actually produced as Example 1 and Comparative example 1, respectively, and evaluation of the dimensional accuracy and an endurance test of each of Example 1 and Comparative example 1 were performed. The results will be described below.

Each of Example 1 and Comparative example 1 was a spur gear formed of a resin containing 15% by weight of fibrous filler. According to evaluation of the dimensional accuracy of each of Example 1 and Comparative example 1, as illustrated in Fig. 8, it was ascertained that swelling deformation due to weld was observed at 4 places in Comparative example 1 whereas dimensional accuracy of Example 1 was able to be suppressed from deteriorating due to such deformation. Regarding the JGMA grade, the results of Comparative example were Grade 6 or out of Grade with respect to the tooth-to-tooth composite and Grade 5 with respect to the total composite, whereas the results of Example 1 were Grade 5 with respect to the tooth-to-tooth composite and Grade 3 with respect to the total composite. "JGMA" is the abbreviation for Japan Gear Manufacturers Association.

Each of Example 1 and Comparative example 1 was a spur gear having a module of 1 mm and the number of teeth is 31. The endurance test of each of Example 1 and Comparative example 1 was performed by using a pair of gears made of the same material under the condition of the torque of 20 kgf·cm and a rotational speed of 1,000 rpm. Consequently, as illustrated in Fig. 9, the test of Comparative example 1 was stopped after a lapse of 2 hours due to thermal deformation of a tooth tip, whereas the test of Example 1 was able to be continued for 16 hours or more. The reason for this is conjectured to be that since Comparative example 1 has poor dimensional accuracy, a portion to which an excessive load is applied is

present at a place where gears are in contact with each other, and the portion is melted due to heat. When melting progresses, since gears spin without engaging with each other, the tooth flank temperature of Comparative example 1 is rapidly lowered after a lapse of 2 hours, as indicated by the graph illustrated in Fig. 9.

Fig. 10 and Fig. 11 illustrate Comparative example 1 and Example 1, respectively, where observation by using an optical microscope was performed on a portion basis, the obtained images were bonded to each other, and processing was performed to clarify a state of weld. As illustrated in Fig. 10, in Comparative example 1, the orientation of the fiber was uniformized from the shaft hole toward the tooth tip at 4 places in the circumferential direction so as to generate welds. On the other hand, as illustrated in Fig. 11, in Example 1, "weldless" was achieved where the orientation of the fiber was not uniformized in contrast to Comparative example 1. That is, in Example 1, "weldless" was achieved by making the shape of a flow passage from a gate to be an asymmetric tornado type so as to move a weld meeting portion from the center, and consequently, the dimensional accuracy and the endurance time were improved. The shape of the flow passage being made to be a wing-like shape and the wing-like flow passages being arranged to have rotational symmetry suppress the circularity from deteriorating due to warpage deformation.

The present disclosure is not limited to the above-described embodiment. Modifications can be made within the bounds of not departing from the scope of the present disclosure.

Reference Signs List

10 gear
11, 17 shaft-direction end surface
12 rim
13 web
14 hub
15 tooth
16 shaft hole
20A, 20B, 20C, 20D recess
21A, 21B, 21C, 21D first portion
22A, 22B, 22C, 22D second portion
23A first end
24A second end
30 metal mold
31A, 31B, 31C, 31D runner
32A, 32B, 32C, 32D pin gate
33 cavity
40A, 40B, 40C, 40D protrusion
43A, 44A circumferential direction end

## Claims

1. A gear formed of a resin containing a filler, comprising:
a plurality of recesses that are formed on a shaft-direction end surface of the gear, that spread from one side to the other side of respective straight lines extending outward in the radial direction of the gear from respective corresponding gate points, and that have asymmetric shapes with respect to the respective straight lines, where each of a plurality of points on the shaft-direction end surface corresponding one-to-one to a plurality of pin gates used to eject the resin during molding of the gear is taken as the gate point.

2. The gear according to Claim 1, wherein a portion of each recess present on at least the one side of the straight line has a shape in which a width in a radial direction of the gear increases from a first end present on the one side of the straight line of both ends of the recess in the circumferential direction of the gear toward a second end present on the other side of the straight line.

3. The gear according to Claim 2, wherein the first end is formed making an acute angle when viewed from the end surface of the gear in the shaft direction.

4. The gear according to Claim 2, wherein the second end is formed making an acute angle when viewed from the end

surface of the gear in the shaft direction.

**5.** The gear according to Claim 1, comprising:

a circular rim having a plurality of teeth; and
a web having the plurality of recesses and adjoining the inner circumference of the rim,
wherein a portion of each recess present on at least the other side of the straight line extends to the outer circumference of the web connected to or opposite the inner circumference of the rim.

**6.** The gear according to Claim 1, wherein the plurality of recesses form a shape having n-fold symmetry, where the number of the gate points is set to be n, when viewed from the end surface of the gear in the shaft direction.

**7.** The gear according to Claim 1, wherein the plurality of recesses form a shape having point symmetry with respect to a center of the shaft-direction end surface.

**8.** The gear according to Claim 1, wherein the number of recesses included in the plurality of recesses is a multiple of the number of the gate points.

**9.** The gear according to Claim 1, wherein the filler is a fibrous filler.

**10.** The gear according to Claim 1, wherein the resin is a polyarylene sulfide resin.

**11.** A robot comprising the gear according to any one of Claims 1 to 10.

**12.** A gear production method comprising:

melting a resin containing a filler; and
molding a resin gear by ejecting a molten resin from a plurality of pin gates into a cavity of a metal mold that is a gear-molding metal mold having the plurality of pin gates and that includes a plurality of protrusions spreading from one side to the other side of respective straight lines extending outward in the radial direction of the metal mold from the respective corresponding pin gates and having asymmetric shapes with respect to the respective straight lines.

FIG. 1

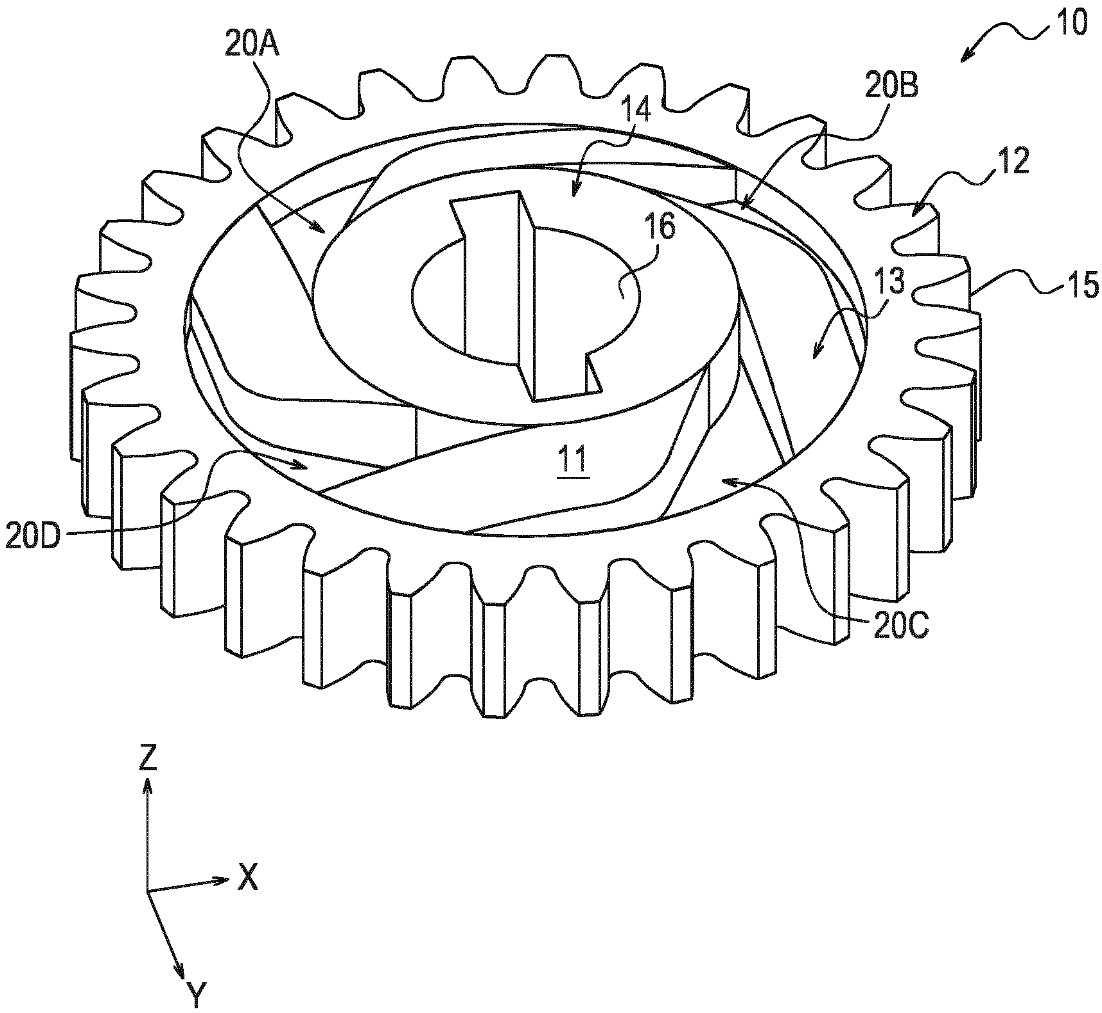

FIG. 2

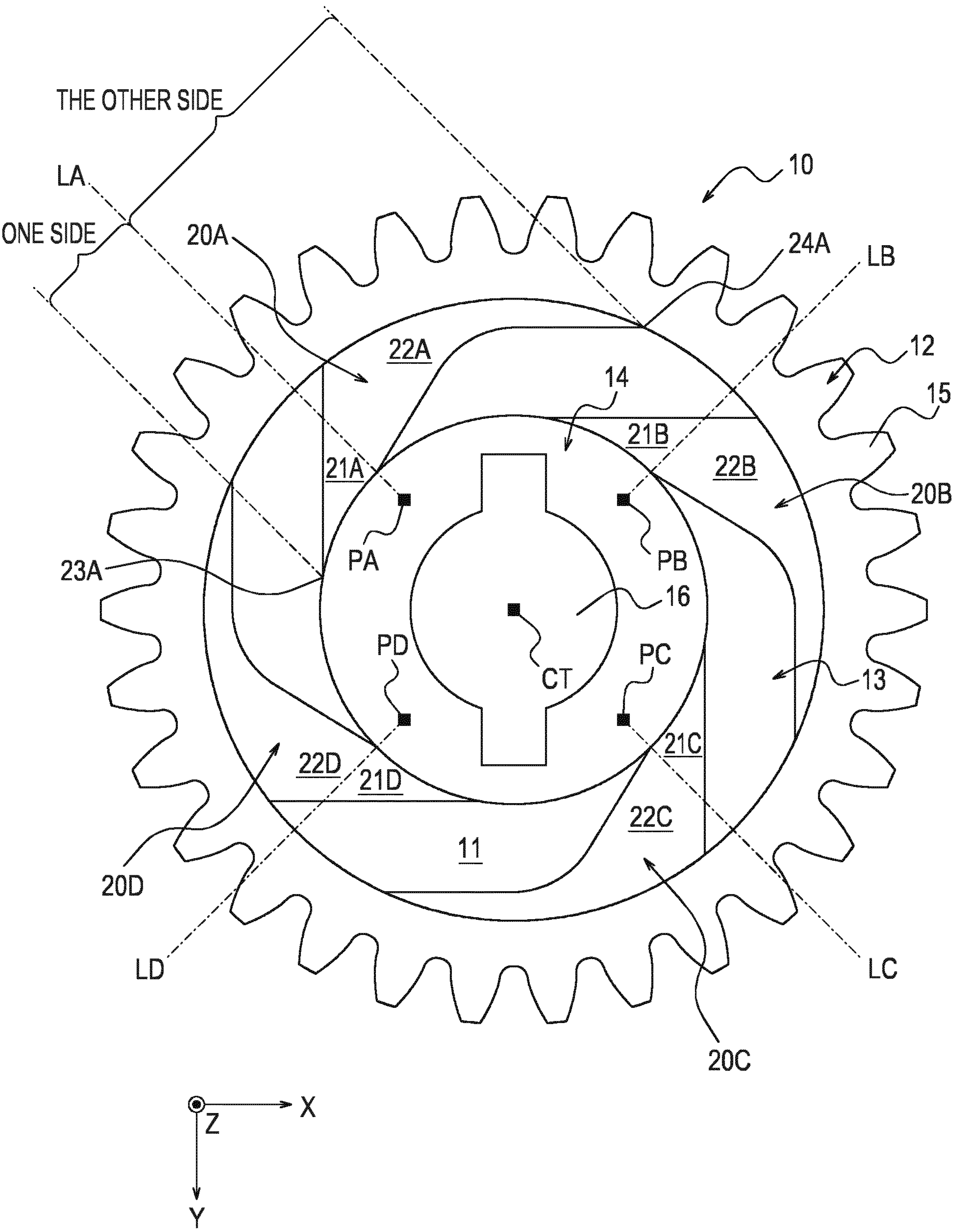
THE OTHER SIDE
LA
ONE SIDE
10
20A
24A
LB
22A
12
14
15
21B
21A
22B
20B
PA
PB
23A
16
PD
PC
CT
13
22D
21D
21C
22C
11
20D
LD
LC
20C
X
Z
Y

FIG. 3

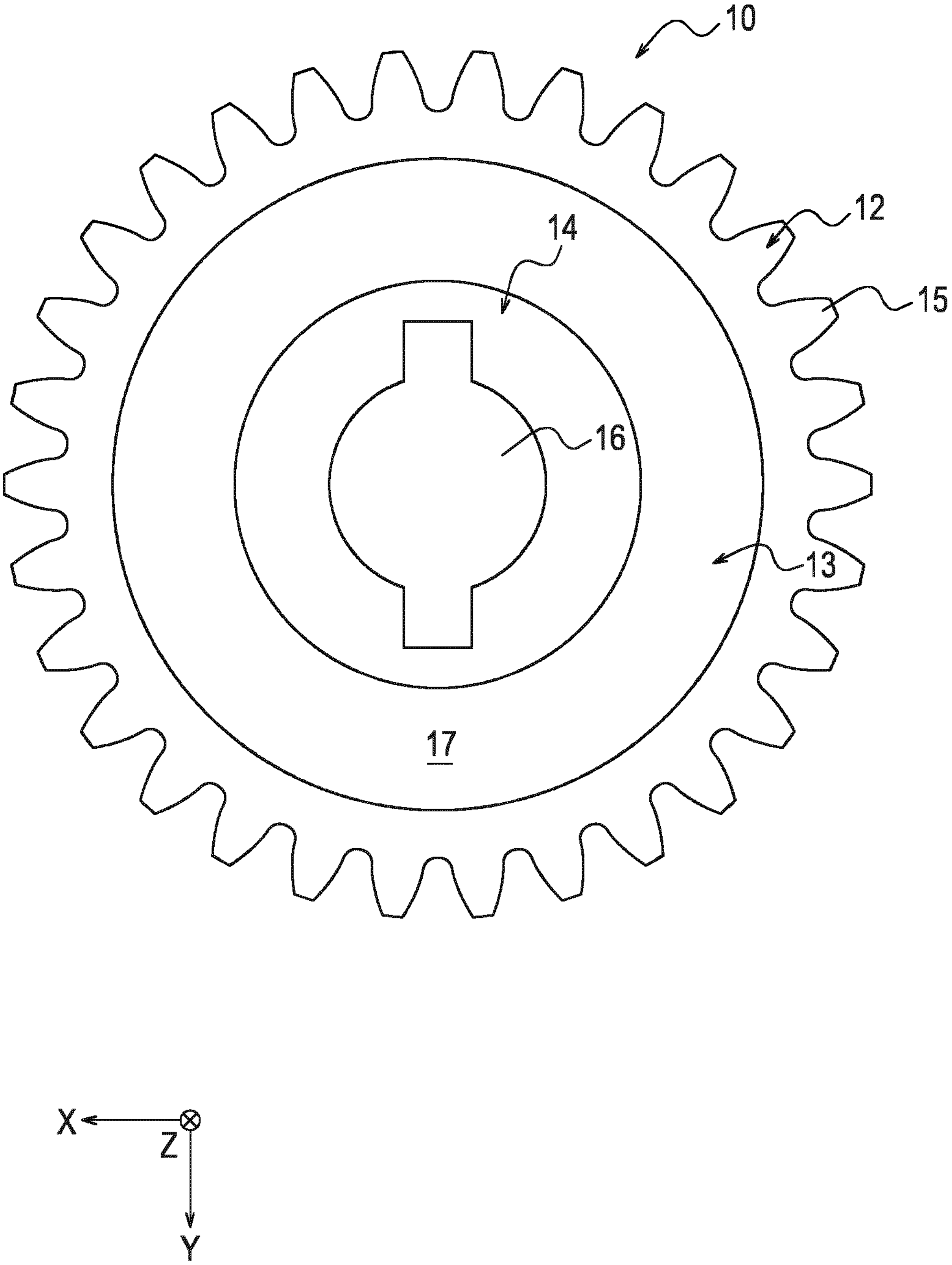

FIG. 4

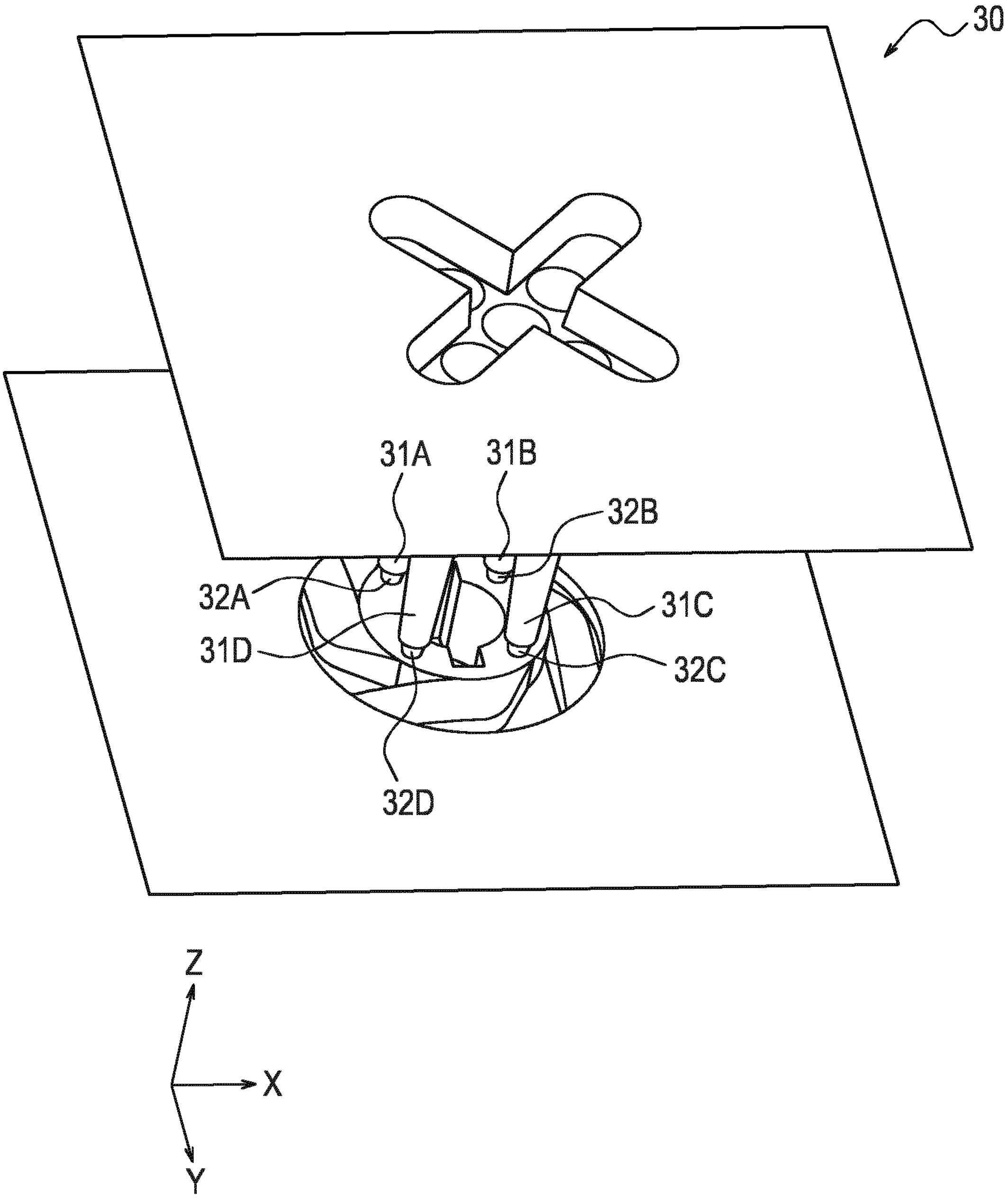

FIG. 5

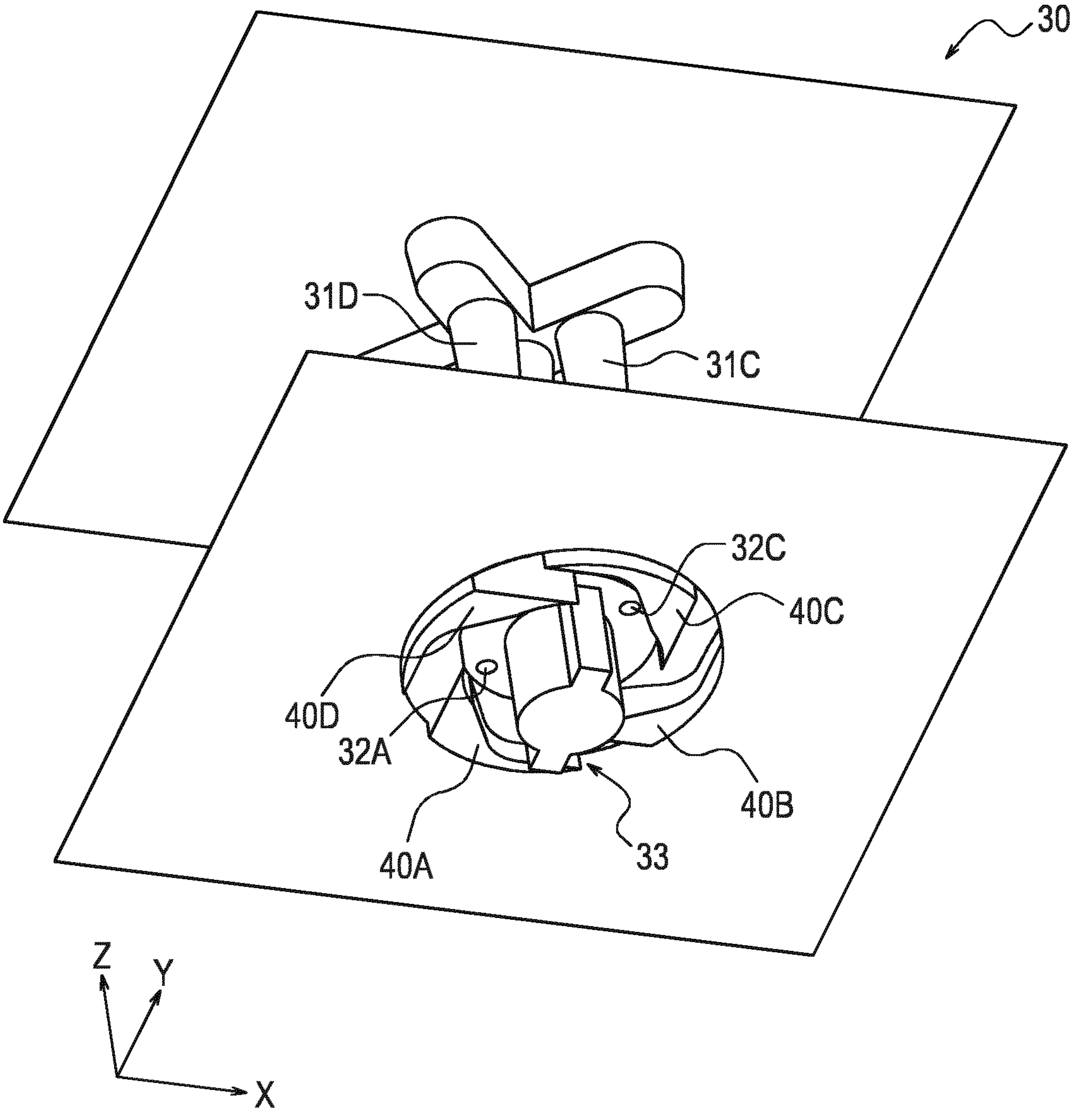

FIG. 6

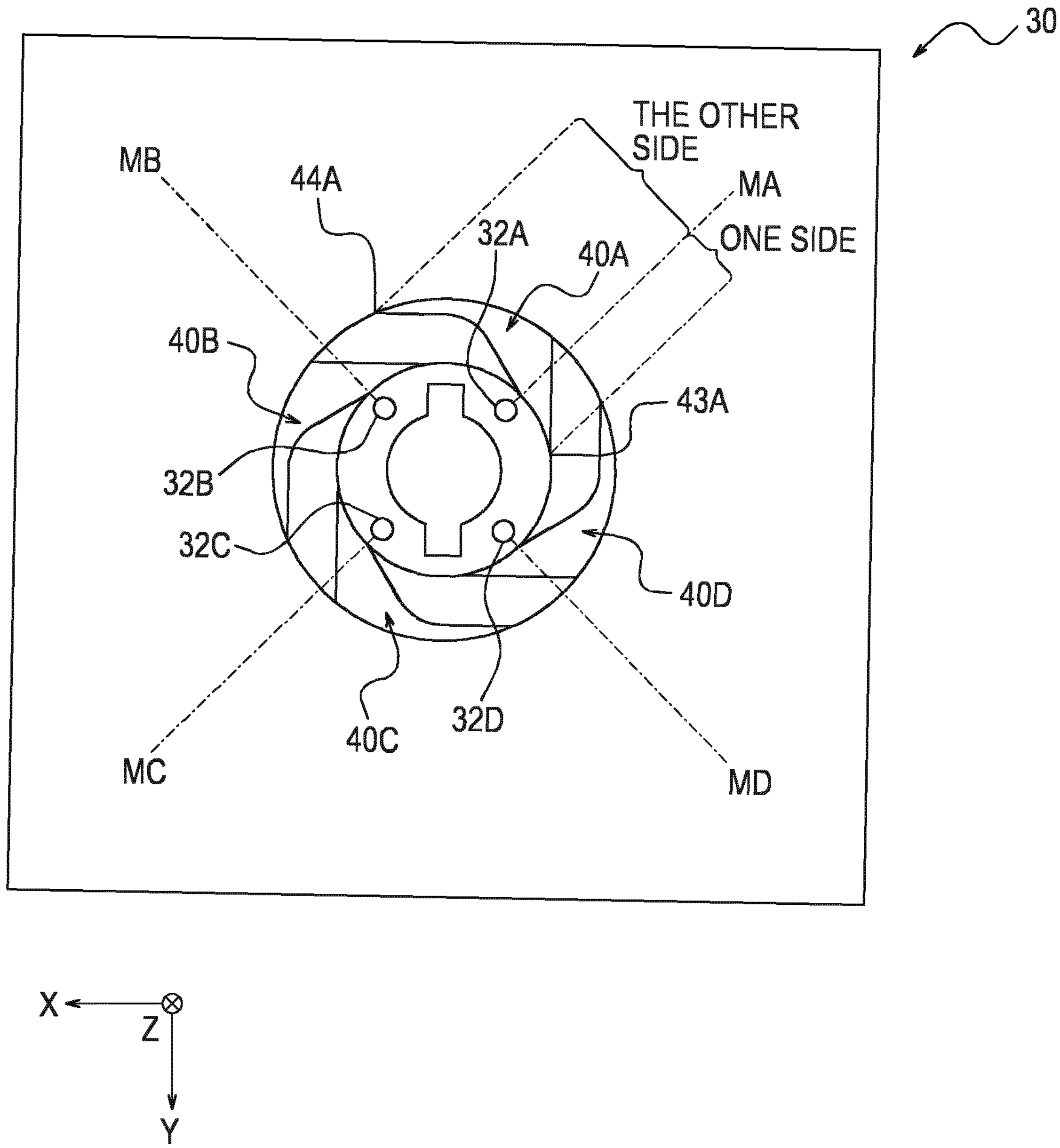

30
THE OTHER SIDE
MA
ONE SIDE
MB
44A
32A
40A
40B
43A
32B
32C
40D
40C
32D
MC
MD
X
Z
Y

FIG. 7

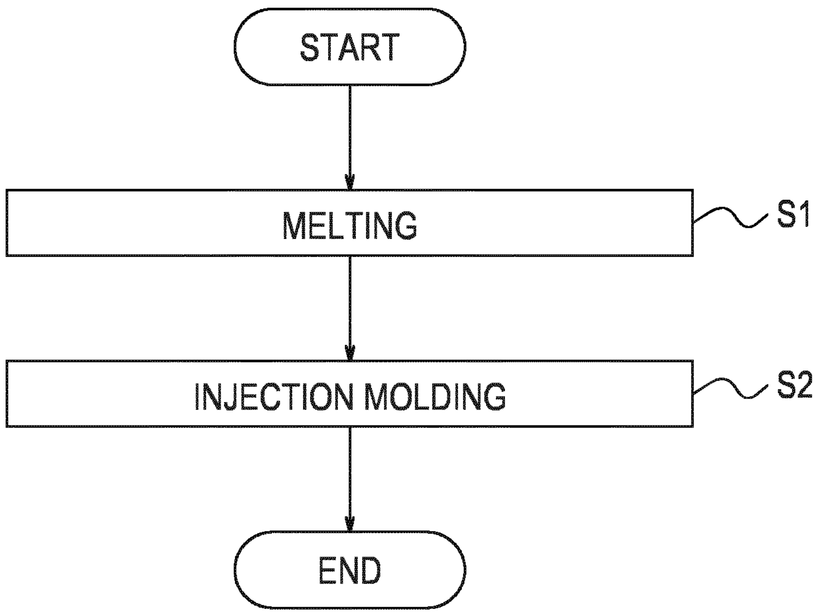

FIG. 8

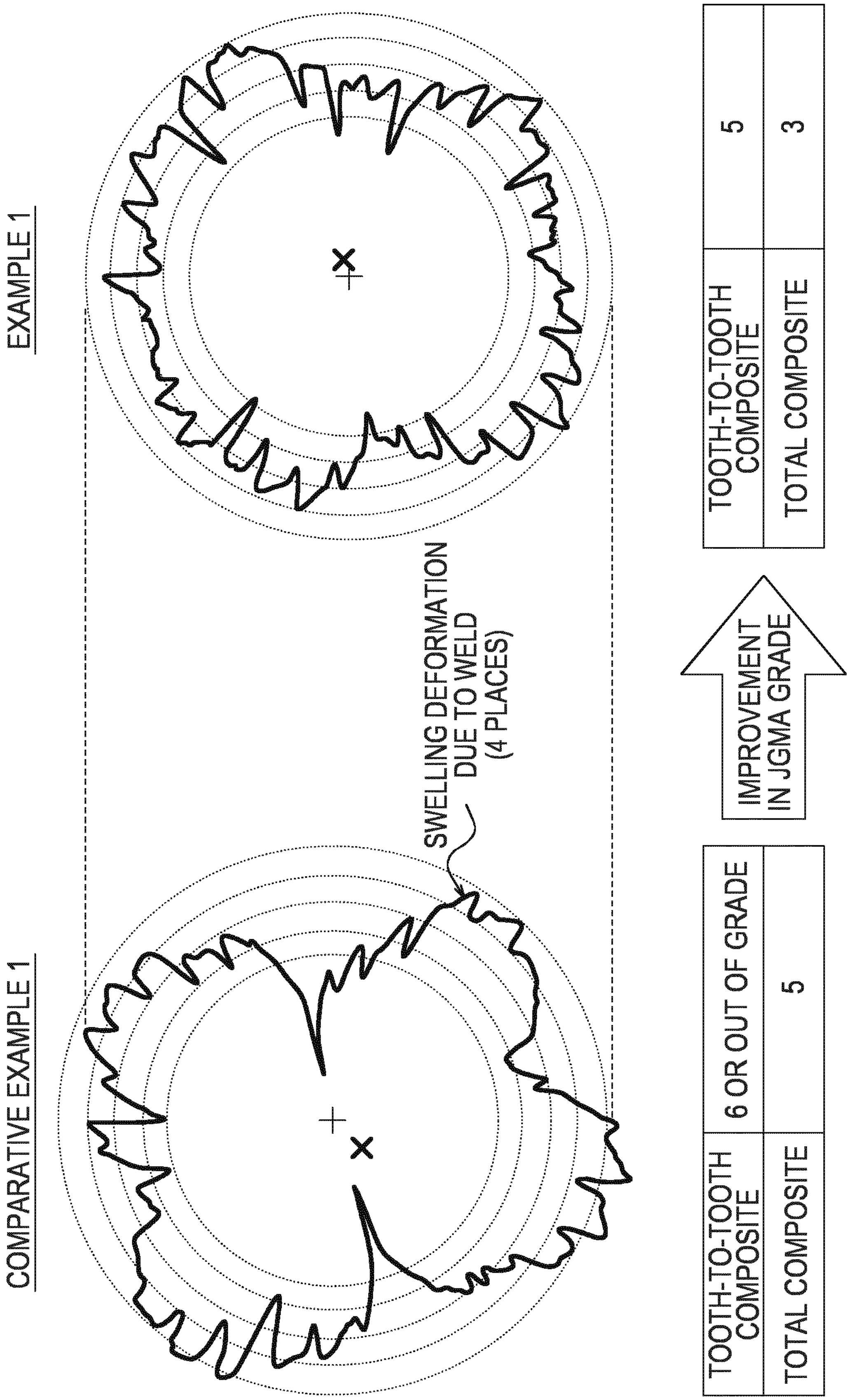
COMPARATIVE EXAMPLE 1
EXAMPLE 1
SWELLING DEFORMATION DUE TO WELD (4 PLACES)
TOOTH-TO-TOOTH COMPOSITE
6 OR OUT OF GRADE
TOTAL COMPOSITE
5
IMPROVEMENT IN JGMA GRADE
TOOTH-TO-TOOTH COMPOSITE
5
TOTAL COMPOSITE
3

FIG. 9

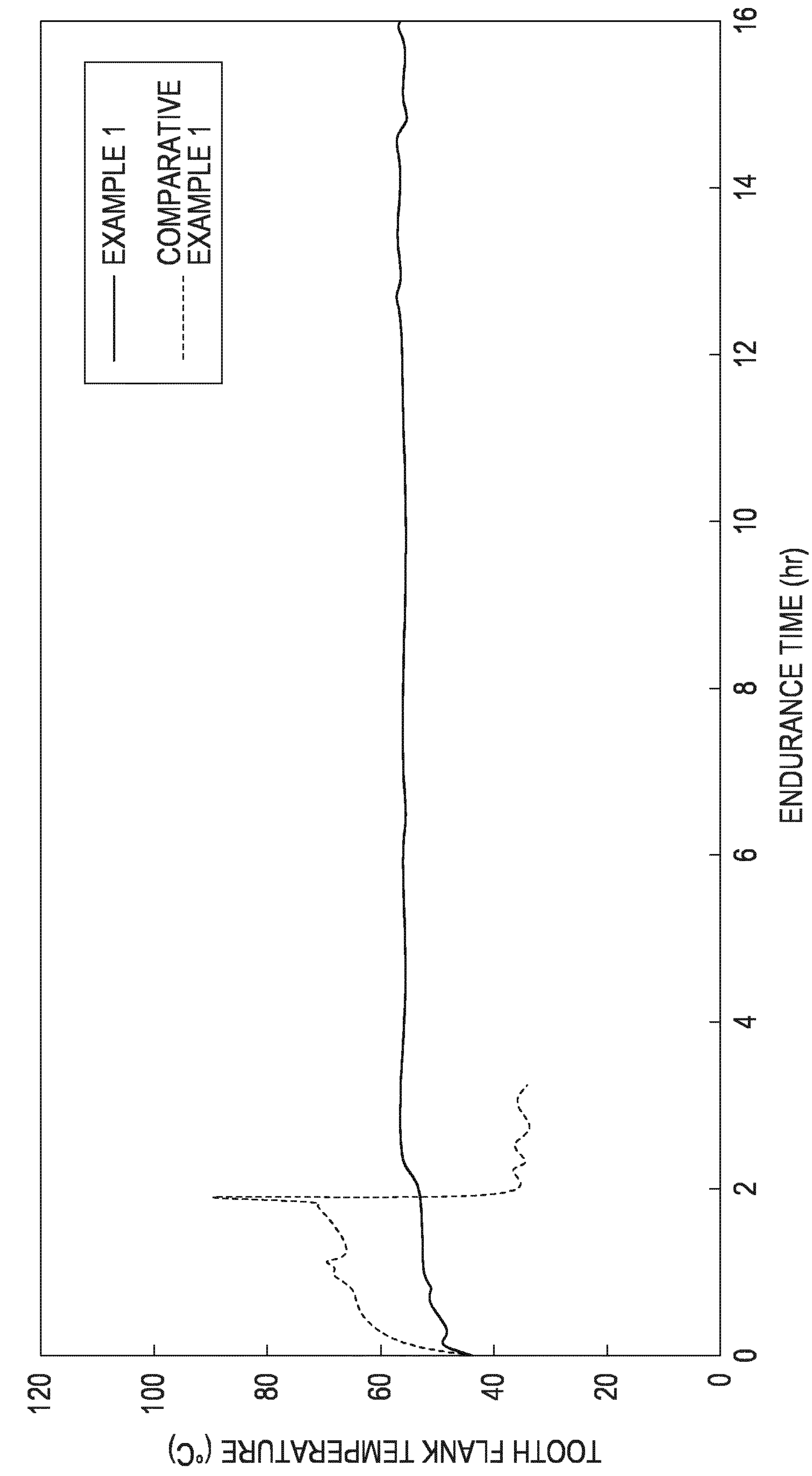
EXAMPLE 1
COMPARATIVE EXAMPLE 1
TOOTH FLANK TEMPERATURE (°C)
0
20
40
60
80
100
120
ENDURANCE TIME (hr)
0
2
4
6
8
10
12
14
16

FIG. 10

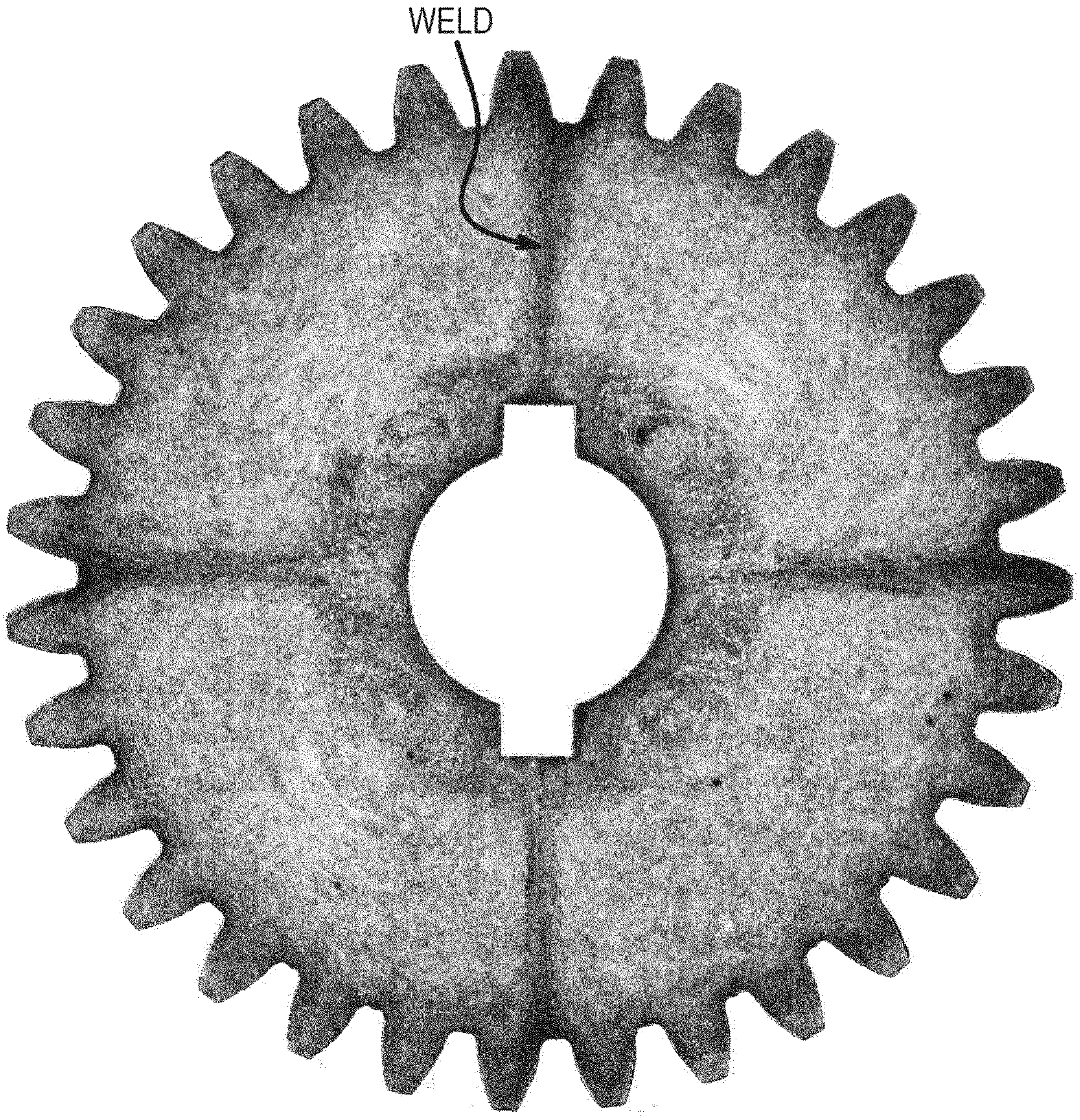

FIG. 11

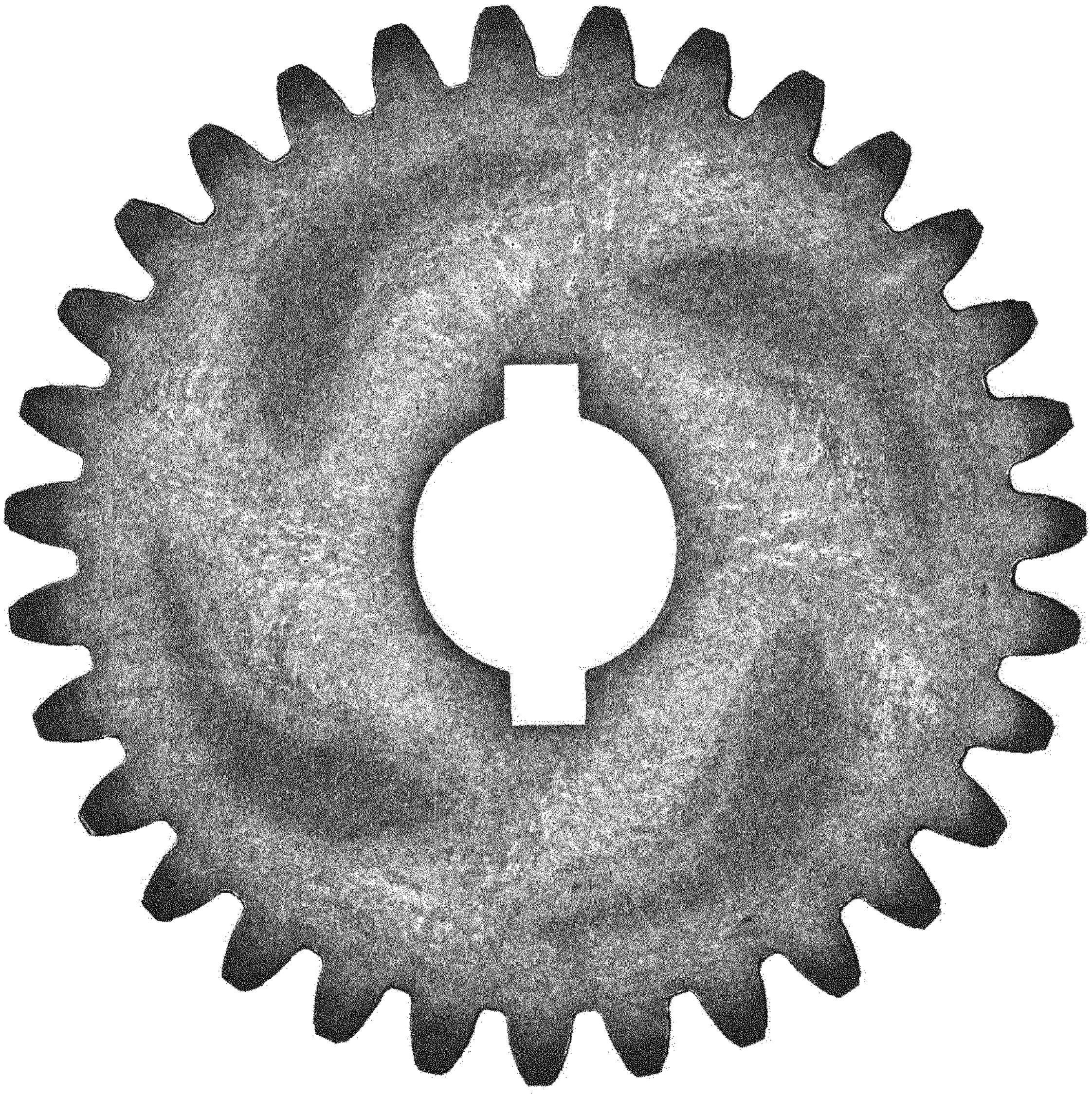

**INTERNATIONAL SEARCH REPORT**

International application No. **PCT/JP2023/016970**

**A. CLASSIFICATION OF SUBJECT MATTER**

***B29C 45/00***(2006.01)i; ***B29C 45/26***(2006.01)i; ***B29D 15/00***(2006.01)i; ***F16H 55/17***(2006.01)i
FI: B29D15/00; B29C45/26; F16H55/17 Z; B29C45/00

According to International Patent Classification (IPC) or to both national classification and IPC

**B. FIELDS SEARCHED**

Minimum documentation searched (classification system followed by classification symbols)

B29C45/00; B29C45/26; B29D15/00; F16H55/17

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-93910 A (CANON INC.) 26 May 2016 (2016-05-26) fig. 1, paragraph [0013] | 1-12 |
| Y | JP 2004-340237 A (ASAHI KASEI CHEMICALS CORP.) 02 December 2004 (2004-12-02) claim 4 | 1-12 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2023** | **04 July 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/016970**

| Patent document cited in search report | Publication date (day/month/year) | Patent family member(s) | Publication date (day/month/year) |
|---|---|---|---|
| JP 2016-93910 A | 26 May 2016 | (Family: none) | |
| JP 2004-340237 A | 02 December 2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004358665 A
- JP 2019218994 A